(19) Europäisches Patentamt
European Patent Office
Office européen des brevets

(11) Veröffentlichungsnummer: **0 118 061**
**B1**

(12) # EUROPÄISCHE PATENTSCHRIFT

(45) Veröffentlichungstag der Patentschrift: **14.09.88**

(51) Int. Cl.⁴: **C 09 K 19/16**, G 02 F 1/137

(21) Anmeldenummer: **84101515.9**

(22) Anmeldetag: **14.02.84**

(54) **Flüssigkristalline Guest-Host-Systeme.**

(30) Priorität: **02.03.83 DE 3307238**

(43) Veröffentlichungstag der Anmeldung:
**12.09.84 Patentblatt 84/37**

(45) Bekanntmachung des Hinweises auf die Patenterteilung:
**14.09.88 Patentblatt 88/37**

(84) Benannte Vertragsstaaten:
**AT CH DE FR GB IT LI NL**

(56) Entgegenhaltungen:
**EP - A - 0 069 257**
**EP - A - 0 084 208**
**DE - A - 3 122 148**
**US - A - 4 378 302**

**Die Akte enthält technische Angaben, die nach dem Eingang der Anmeldung eingereicht wurden und die nicht in dieser Patentschrift enthalten sind.**

(73) Patentinhaber: **Merck Patent Gesellschaft mit beschränkter Haftung, Frankfurter Strasse 250, D-6100 Darmstadt (DE)**

(72) Erfinder: **Scheuble, Bernhard, Dr., Am Grenzweg 18, D-6146 Alsbach-Hähnlein 1 (DE)**
Erfinder: **Weber, Georg, Wilhelm-Leuschner-Strasse 38, D-6106 Erzhausen (DE)**
Erfinder: **Pohl, Ludwig, Dr., Niebergallweg 5, D-6100 Darmstadt (DE)**

**EP 0 118 061 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft neue flüssigkristalline Guest-Host-Systeme mit mindestens 2 pleochroitischen Farbstoffen.

Obwohl flüssigkristalline Guest-Host-Systeme Gegenstand zahlreicher Veröffentlichungen sind [G.H. Heilmeier und L.A. Zanoni, Appl. Phys. Lett. 13, 91 (1968); D.L. White and G.N. Taylor, J. Appl. Phys. 45, 4718 (1974); T. Uchida, H. Seki, C. Shishido und M. Wada, Mol. Cryst. Liq. Cryst. 54, 161 (1979), (aus DE-A-3 122 148 sind Guest-Host-Systeme bekannt, die für eine Schichtdicke oder eine Farbstoffkonzentration eine Farbneutralität gegenüber verschiedenen Beleuchtungsarten aufweisen)] finden sie bisher noch keine kommerzielle Anwendung. Dies hat im wesentlichen zwei Gründe: Zunächst gab es keine Guest-Host-Mischung, die gegenüber unterschiedlichen Beleuchtungsarten und insbesondere gleichzeitig für unterschiedliche Schichtdicken des Guest-Host-Systems im elektrooptischen Anzeigeelement achromatisch blieb. Weiterhin waren die bisherigen Guest-Host-Systeme nur für einen eingeschränkten Temperaturbereich (Indoor-Anwendung) geeignet, da sie im Vergleich zum Host-Material eine deutlich erhöhte Viskosität aufwiesen.

In zunehmendem Masse wird heute jedoch ein sehr breiter Temperaturbereich (Outdoor-Anwendung) gefordert, der Guest-Host-Systeme voraussetzt, die gerade bei sehr tiefen Temperaturen noch betrieben werden können.

Gegenstand der Erfindung sind flüssigkristalline Guest-Host-Systeme mit mindestens zwei pleochroitischen Farbstoffen, dadurch gekennzeichnet, dass mindestens einer der Farbstoffe ein Absorptionsmaximum oberhalb 665 nm besitzt, wobei die Farbstoffe und deren Konzentrationen so gewählt werden, dass ein das flüssigkristalline Guest-Host-System enthaltendes elektrooptisches Anzeigeelement einen nach CIE (1964) gemessenen Farbabstand $\Delta E$ bis zum Achromasiepunkt kleiner als 5 Einheiten aufweist.

Weiterhin sind Gegenstand der Erfindung die Verwendung dieser Guest-Host-Systeme für elektrooptische Anzeigeelemente sowie diese Guest-Host-Systeme enthaltende elektrooptische Anzeigeelemente.

Aufgabe der vorliegenden Erfindung war es, neue flüssigkristalline Guest-Host-Systeme bereitzustellen, die die oben angegebenen Mängel nicht oder nur in deutlich geringerem Masse aufweisen. Diese Aufgabe wurde durch die Bereitstellung der erfindungsgemässen flüssigkristallinen Guest-Host-Systeme gelöst.

Es wurde gefunden, dass sich die erfindungsgemässen flüssigkristallinen Guest-Host-Systeme vorzüglich für elektrooptische Anzeigeelemente eignen. Die erfindungsgemässen flüssigkristallinen Guest-Host-Systeme zeichnen sich insbesondere durch beleuchtungsartunabhängige und schichtdickenunabhängige Farbeigenschaften aus. Mit der Bereitstellung der erfindungsgemässen flüssigkristallinen Guest-Host-Systeme wird ausserdem unter verschiedenen anwendungstechnischen Gesichtspunkten die Anwendbarkeit solcher Systeme erheblich verbreitert. Die erfindungsgemässen flüssigkristallinen Guest-Host-Systeme und diese enthaltende elektrooptische Anzeigeelemente können in Abhängigkeit von der Auswahl der Komponenten des Host-Materials und der pleochroitischen Farbstoffe für die verschiedensten Anwendungen bereitgestellt werden.

Die erfindungsgemässen Guest-Host-Systeme umfassen insbesondere solche mit niedriger Viskosität, die sich vorzugsweise für Outdoor-Anwendungen eignen.

Die erfindungsgemässen Guest-Host-Systeme setzen sich aus einem für den jeweiligen Anwendungsbereich geeigneten Host-Material und mindestens zwei pleochroitischen Farbstoffen zusammen.

Die Zusammensetzung des Host-Materials ist nicht kritisch. Das Hostmaterial kann nematisch oder cholesterisch sein und kann optisch aktive Dotierstoffe enthalten. Prinzipiell können Mischungen aus allen bekannten Flüssigkristallmaterialien verwendet werden. Die wichtigsten als Bestandteile derartiger Host-Mischungen in Frage kommenden Verbindungen lassen sich durch die Formel I charakterisieren,

$$R^1\text{–A–G–E–}R^2 \qquad \text{I}$$

worin A und E je ein carbo- oder heterocyclisches Ringsystem aus der aus 1,4-disubstituierten Benzol- und Cyclohexanringen, 4,4′-disubstituierten Biphenyl-, Phenylcyclohexan- und Cyclohexylcyclohexansystemen, Bicyclooctansystemen, 2,5-disubstituierten Pyrimidin- und 1,3-Dioxanringen, 2,6-disubstituiertem Naphthalin, Di- und Tetrahydronaphthalin, Chinazolin und Tetrahydrochinazolin gebildeten Gruppe,

–CH=CH–    –N(O)=N–
–CH=CY–    –CH=N(O)–
–C≡C–    $–CH_2–CH_2–$
–CO–O–    $–CH_2–O–$
–CO–S–    $–CH_2–S$
–CH=N–    –COO– 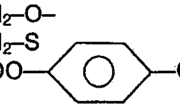 –COO–

oder eine C–C– Einfachbindung,

Y Halogen, vorzugsweise Chlor, oder CN,

$R^3$ und $R^4$ H, Halogen, vorzugsweise Chlor oder Fluor, oder CN und

$R^1$ und $R^2$ Alkyl, Alkoxy, Alkanoyloxy oder Alkoxycarbonyloxy mit bis zu 18, vorzugsweise bis zu 8 Kohlenstoffatomen, oder einer dieser Reste auch CN, NC, $NO_2$, $CF_3$, F, Cl oder Br bedeuten.

In den Verbindungen der Formel I können die 1,4-disubstituierten Benzolringe durch bei Flüssigkristallmaterialien übliche laterale Gruppen substituiert sein. Die trans-1,4-disubstituierten Cyclohexanringe können in 1- oder 4-Stellung durch bei Flüssigkristallmaterialien übliche axiale Gruppen (zum Beispiel CN, F, $CH_3$) substituiert sein. Vorzugsweise enthält das Host-Material mindestens eine Flüssigkristall-Verbindung mit einem derartig axial substituierten Cyclohexanring.

Bei den meisten dieser Verbindungen sind $R^1$ und $R^2$ voneinander verschieden, wobei einer dieser Reste meist eine Alkyl- oder Alkoxygruppe ist. Aber auch andere Varianten der vorgesehenen Substituenten sind gebräuchlich. Viele solcher Substanzen oder auch Gemische davon sind im Handel erhältlich. Alle können nach üblichen Standardmethoden hergestellt werden.

Vorzugsweise werden als Bestandteile der Host-Mischungen Verbindungen der Formeln Ia bis Im

| | |
|---|---|
| $R^1$–Cy–Ph–$R^2$ | Ia |
| $R^1$–Cy–Ph–Ph–$R^2$ | Ib |
| $R^1$–Cy–Ph–Ph–Cy–$R^2$ | Ic |
| $R^1$–Cy–Ph–COO–Cy–$R^2$ | Id |
| $R^1$–Cy–Ph–OCO–Cy–$R^2$ | Ie |
| $R^1$–Ph–Ph–$R^2$ | If |
| $R^1$–Ph–Ph–Ph–$R^2$ | Ig |
| $R^1$–Dio–Ph–$R^2$ | Ih |
| $R^1$–Py–Ph–$R^2$ | Ii |
| $R^1$–Cy–COO–Cy–$R^2$ | Ij |
| $R^1$–Cy–Cy–COO–Cy–$R^2$ | Ik |
| $R^1$–Cy–Cy–OCO–Cy–$R^2$ | Il |
| $R^1$–Cy–$CH_2$–$CH_2$–Ph–$R^2$ | Im |

verwendet, worin Ph eine 1,4-Phenylengruppe, Cy eine 1,4-Cyclohexylengruppe, Dio eine 1,3-Dioxan-2,5-diylgruppe, Py eine Pyrimidin-2,5-diylgruppe bedeuten und $R_1$ und $R_2$ die angegebene Bedeutung haben.

Die erfindungsgemässen Guest-Host-Systeme enthalten weiterhin mindestens zwei, bevorzugt 3 bis 5 pleochroitische Farbstoffe, wobei mindestens einer der Farbstoffe ein Absorptionsmaximum oberhalb 665 nm, bevorzugt oberhalb 670 nm, insbesondere oberhalb 685 nm besitzt. Prinzipiell können als Farbstoffe alle für Guest-Host-Mischungen geeigneten pleochroitischen Farbstoffe verwendet werden. Die wichtigsten dieser Farbstoffe gehören den Klassen der Anthrachinon-, Naphthochinon-, Azo-, Indigo-, und/oder Perylen-Farbstoffe an.

Diese sind in reicher Vielfalt in der Literatur beschrieben. Der Fachmann kann sich die für den jeweiligen Anwendungszweck am besten geeigneten Farbstoffe ohne Schwierigkeiten heraussuchen. So sind z.B. Anthrachinonfarbstoffe beschrieben in EP 34 832, EP 44 893, EP 48 583, EP 54 217, EP 56 492, EP 59 036, GB 2 065 158, GB 2 065 695, GB 2 081 736, GB 2 082 196, GB 2 094 822, GB 2 094 825, JP-OS 55-123 673, DE 3 017 877, DE 3 040 102, DE 3 115 147, DE 3 115 762, DE 3 150 803 und DE 3 201 120, Naphthochinfarbstoffe beschrieben in DE 3 126 108 und 3 202 761, Azofarbstoffe in EP 43 904, DE 3 123 519, PCT WO 82/2054, GB 2 079 770, JP-OS 56-57850, JP-OS 56-104984, US 4 308 161, US 4 308 162, US 4 340 973, T. Uchida, C. Shishido, H. Seki und M. Wada: Mol. Cryst. Liq. Cryst. 39, 39–52 (1977) und H. Seki, C. Shishido, S. Yasui und T. Uchida: Jpn. J. Appl. Phys. 21, 191–192 (1982) und Perylene beschrieben in EP 60 895, EP 68 427 und PCT WO 82/1191.

Nachfolgend sind aus diesen Farbstoffklassen einige Gruppen noch detaillierter angegeben:

a) Anthrachinonfarbstoffe mit S-Alkyl-, S-Cycloalkyl- und/oder S-Aryl-Gruppen, beispielsweise der Formel II

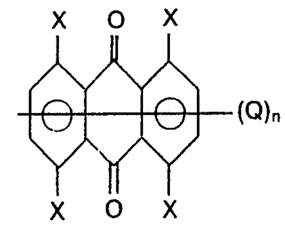

II

worin

Q $NH_2$, OH, Alkyl, Aryl, $NO_2$ oder Halogen und

n 0, 1, 2, 3 oder 4 bedeutet,

X jeweils H, SR, $NZ_1Z_2$ oder Q

R jeweils Alkyl, Aryl oder Cycloalkyl und

$Z_1$ und $Z_2$ jeweils H, Alkyl, Aryl oder Cycloalkyl bedeutet (bekannt sind derartige Farbstoffe z.B. aus EP 0 059 036), und

b) Anthrachinonfarbstoffe mit substituierten Phenyl- und/oder Cyclohexylgruppen, beispielsweise der Formel III

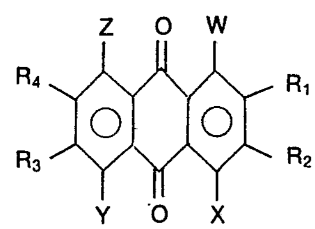

III

worin W, X, Y und Z Wasserstoff, $NH_2$, OH, $NHCH_3$ oder $NHC_2H_5$ bedeuten und einer oder zwei der Reste $R_1$, $R_2$, $R_3$ und $R_4$ eine Gruppe der Teilformeln

–Ph–R, –Ph–OR, –Cy–R, –Ph–Cy–R oder –Cy–Cy–R

und die anderen Wasserstoff bedeuten, wobei R eine Alkylgruppe mit 1–12 Kohlenstoffatomen ist (bekannt sind derartige Farbstoffe z.B. aus DE 3 040 102) und

c) Naphthochinonfarbstoffe, beispielsweise der Formel IV

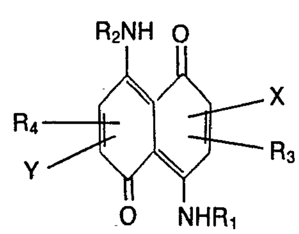

worin X und Y gleich oder verschieden sind und Wasserstoff, Chlor oder Brom,

$R_1$, $R_2$, $R_3$ und $R_4$ Wasserstoff, Alkyl oder Alkoxyalkyl mit bis zu 8 C-Atomen oder eine zyklische Gruppe Z,

Z –Ph–R, –Ph–Ph–R, –Cy–R, –Cy–Cy–R, –Ph–Cy–R oder –Cy–Ph–R und

R Alkyl, Alkoxy, Alkoxyalkyl, Alkoxyalkoxy oder Alkanoyloxy mit bis zu 8 C-Atomen bedeuten (bekannt sind derartige Farbstoffe z.B. aus DE 3 126 108), und

d) Azofarbstoffe, beispielsweise der Formel V

$$R_1\text{–}Ph_1\text{–}(N{=}N\text{–}Ph_{1+n}\text{–})_n\text{–}N{=}N\text{–}Ph_{2+n}\text{–}R_2 \quad V$$

worin

$R_1$ Alkyl oder Alkylsulfonyl,

$R_2$ Dialkylamino, Monoalkylamino oder eine 5- oder 6-gliedrige Cycloalkylaminogruppe und

n 1, 2 oder 3 ist,

wobei an die Benzolringe unter Bildung von Naphthalinstrukturen ein zweiter Benzolring kondensiert sein kann (bekannt sind derartige Farbstoffe z.B. aus US 4 340 973) und/oder

e) Azofarbstoffe, beispielsweise der Formel VI

$$R_1\text{–}Ph_1\text{–}(N{=}N\text{–}Ph_{1+n}\text{–})_n\text{–}N{=}N\text{–}Ph_{2+n}\text{–}OR_2 \quad VI$$

worin

$R_1$ Alkyl,

$R_2$ Alkyl, Alkylcarbonyl, Arylcarbonyl oder Alkyloxycarbonyl und

n 1, 2, 3 oder 4 ist,

wobei an die Benzolringe unter Bildung von Naphthalinstrukturen ein zweiter Benzolring kondensiert sein kann (bekannt sind derartige Farbstoffe z.B. aus JP-OS 56-104 984) verwendet.

Als pleochroitische Farbstoffe mit einem Absorptionsmaximum oberhalb 665 nm können prinzipiell alle diese Bedingung erfüllenden, für Guest-Host-Mischungen geeigneten Farbstoffe verwendet werden. Besonders bevorzugt sind die oben angeführten Azo-Farbstoffe der Formeln V und VI und die Naphthochinonfarbstoffe der Formel IV.

Durch geeignete Wahl der Farbstoffkomponenten und der relativen Farbstoffkonzentrationen können die erfindungsgemässen Guest-Host-Systeme den verschiedensten Anwendungsbereichen angepasst werden.

Für Indoor-Anwendungen werden vorzugsweise Anthrachinon-, Naphthochinon- und/oder Perylen-Farbstoffe verwendet.

Für Outdoor-Anwendungen werden vorzugsweise Azofarbstoffe und/oder Naphthochinonfarbstoffe verwendet.

Die erfindungsgemässen Guest-Host-Systeme enthalten in der Regel 0,1 bis 15, vorzugsweise 0,5 bis 10, insbesondere 1 bis 7 Gewichtsprozent pleochroitische Farbstoffe, wobei der Anteil des Farbstoffes bzw. der Farbstoffe mit einem Absorptionsmaximum oberhalb 665 nm in der Regel 0,5 bis 5, vorzugsweise 1 bis 4 Gewichtsprozent beträgt. Bevorzugte erfindungsgemässe Guest-Host-Systeme mit Azo-Farbstoffen als pleochroitischem Farbstoff bzw. pleochroitischen Farbstoffen mit einem Absorptionsmaximum oberhalb 665 nm enthalten in der Regel 0,1 bis 5, vorzugsweise 0,3 bis 4 Gewichtsprozent, dieser Azofarbstoffe.

Für die Beleuchtungsartunabhängigkeit und insbesondere für die Schichtdickenunabhängigkeit ist es von grundlegender Bedeutung, dass die pleochroitischen Farbstoffe des erfindungsgemässen Guest-Host-Systems einen geeigneten Teil des sichtbaren Spektrums abdecken und dass die Absorption in diesem Bereich mehr oder weniger konstant ist.

Hierzu verwendet man die sogenannte metamerische Anpassung, wie sie z.B. von T.J. Scheffer (J. Appl. Phys. 53, 257 (1982)) beschrieben wurde. Dabei wird jeder Farbe ein Vektor, ausgehend vom Farbort für Schwarz zugeordnet. Die normale Beleuchtung wird durch die internationale Standardbeleuchtung CIE-A (Glühlampenlicht) und CIE-D65 (mittleres Tageslicht) ersetzt. Die Bedingung der Achromasie für diese beiden extremen Beleuchtungen gewährleistet auch bei anderen Beleuchtungen, dass die Anzeige achromatisch bleibt. Die Farbe kann in einem Diagramm (Farbebene) dargestellt werden, wobei die Farbkoordinaten so gewählt werden, dass für das menschliche Auge gleiche Farbdifferenzen auch gleichen Abständen im Farbdiagramm entsprechen. Hier wurde das 1976 CIE-UCS Farbdiagramm verwendet. Eine bevorzugte schwarze Mischung wird beispielsweise dadurch erreicht, dass die Farbstoffkonzentrationen so gewählt werden, dass $\Delta u$ und $\Delta v$ für alle Beleuchtungsarten Null werden.

Will man Farbunterschiede durch Zahlen ausdrücken, so kann man die gemessenen CIE-Farbwerte mit Hilfe einer Farbabstandsformel in einen Farbabstand $\Delta E$ umrechnen, welcher ein Mass für den visuell empfundenen Farbunterschied ist. Das menschliche Auge eines Normalbetrachters kann Farbabstände kleiner als 1 nicht wahrnehmen. Die zulässige technische Toleranz für Farbabstände liegt im allgemeinen im Bereich zwischen 0 und 5.

Die bei den erfindungsgemässen elektrooptischen Anzeigeelementen erhaltenen Farbabstände $\Delta E$ sind kleiner als 5, vorzugsweise kleiner als 1, insbesondere kleiner als 0,5. Insbesondere sind diese Farbabstände beleuchtungsart- und schichtdickenunabhängig, d.h. die Änderungen der Farbabstände bei Variationen der Beleuchtungsart und/oder der Schichtdicke des elektrooptischen Anzeigeelementes sind kleiner als 1 und somit vom menschlichen Auge nicht zu erkennen.

Die erfindungsgemässen flüssigkristallinen Guest-Host-Systeme können für positive und/oder negative Bilddarstellung verwendet werden.

Die Herstellung der erfindungsgemässen Guest-Host-Systeme erfolgt in an sich üblicher Weise. In der Regel werden die gewünschten Mengen der verschiedenen pleochroitischen Farbstoffe, erhältlich aus der metamerischen Anpassung, im Host-Material gelöst, zweckmässig bei erhöhter Temperatur.

Es ist jedoch auch möglich, Lösungen des pleochroitischen Farbstoffes und des Host-Materials in einem geeigneten organischen Lösungsmittel, zum Beispiel Aceton, Chloroform oder Methanol, zu mischen und das Lösungsmittel nach gründlicher Durchmischung wieder zu entfernen, beispielsweise durch Destillation unter vermindertem Druck. Selbstverständlich muss bei dieser Verfahrensweise darauf geachtet werden, dass durch das Lösungsmittel keine Verunreinigungen

oder unerwünschte Dotierungsstoffe eingeschleppt werden.

Durch geeignete Zusätze können die flüssigkristallinen Guest-Host-Systeme nach der Erfindung so modifiziert werden, dass sie in allen bisher bekannt gewordenen Arten von Guest-Host-Anzeigeelementen verwendet werden können. Derartige Zusätze sind dem Fachmann bekannt und sind in der einschlägigen Literatur ausführlich beschrieben. Beispielsweise können Substanzen zur Veränderung der dielektrischen Anisotropie, der Viskosität, der Leitfähigkeit und/oder der Orientierung der nematischen Phasen zugesetzt werden. Derartige Substanzen sind zum Beispiel in den DE-OS 2 209 127, 2 240 864, 2 321 623, 2 338 281 und 2 450 088 beschrieben.

Die folgenden Beispiele sollen die Erfindung erläutern. In den Beispielen bedeuten F. den Schmelzpunkt und K. den Klärpunkt einer flüssigkristallinen Substanz in Grad Celsius. Wenn nichts anderes angegeben ist, bedeuten Angaben von Teilen oder Prozent Gewichtsteile bzw. Gewichtsprozent.

Beispiel 1

In einem Flüssigkristallgemisch aus

18% 4-(trans-4-n-Propylcyclohexyl)-benzonitril
14% 4-(trans-4-n-Butylcyclohexyl)-benzonitril
25% 4-(trans-4-n-Pentylcyclohexyl)-benzonitril
15% 4-(trans-4-n-Heptylcyclohexyl)-benzonitril
7% 4-(trans-4-n-Pentylcyclohexyl)-4'-cyanobiphenyl
7% 4-(trans-4-n-Pentylcyclohexyl)-4'-(trans-4-n-propylcyclohexyl)-biphenyl
6% 4-n-Pentyl-4'-cyanoterphenyl
8% trans-4-n-Butylcyclohexancarbonsäure-4-(trans-4-n-propylcyclohexyl)-phenylester

wurden

2,2% ICI-Anthrachinonfarbstoff Red 77 ($\lambda$ max = 555 nm)
2,2% ICI-Anthrachinonfarbstoff Yellow 99 ($\lambda$ max = 463 nm)
0,6% ICI-Anthrachinonfarbstoff Blue 26 ($\lambda$ max = 638 nm)

und

1,4% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentyloxyanilin, 4-n-Hexyloxyanilin und 4-n-Heptyloxyanilin, $\lambda_{max}$ = 688 nm)

gelöst.

Dieses Guest-Host-System zeigt in einem elektrooptischen Anzeigeelement bei einer Schichtdicke von 1 µm bei Kunstlicht (CIE-A) einen Farbabstand ΔE bis zum Achromasiepunkt von 0,3 und bei Tageslicht (CIE-D65) einen Farbabstand ΔE von 0,2. Bei einer Schichtdicke von 14 µm ergeben sich Farbabstände ΔE von 0,3 (CIE-A) bzw. 0,7 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 2

6,4% des in Beispiel 1 angegebenen Farbstoffgemisches werden in einem Flüssigkristallgemisch aus

17% 4-(trans-5-n-Butyl-1,3-dioxan-2-yl)-benzonitril
14% 4-Ethyl-4'-cyanobiphenyl
26% 4-n-Butyl-4'-cyanobiphenyl
8% 4-(trans-4-Pentylcyclohexyl)-4'-cyanobiphenyl
5% 4-(trans-4-Ethylcyclohexyl)-benzoesäure-(4-cyanophenyl)-ester
7% 4-(trans-4-n-Pentylcyclohexyl)-benzoesäure-(4-cyanophenyl)-ester

gelöst. Dieses Guest-Host-System zeigt in einem elektrooptischen Anzeigeelement bei einer Schichtdicke von 2 µm bei Kunstlicht (CIE-A) einen Farbabstand ΔE bis zum Achromasiepunkt von 0,6 und bei Tageslicht (CIE-D65) einen Farbabstand ΔE von 0,3. Bei einer Schichtdicke von 16 µm ergeben sich Farbabstände von ΔE von 0,2 (CIE-A) bzw. 0,5 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 3

6,4% des in Beispiel 1 angegebenen Farbstoffgemisches werden in einem Flüssigkristallgemisch aus

18% 4-(trans-4-n-Propylcyclohexyl)-benzonitril
14% 4-(trans-4-n-Butylcyclohexyl)-benzonitril
25% 4-(trans-4-n-Pentylcyclohexyl)-benzonitril
13% 4-(trans-4-n-Heptylcyclohexyl)-benzonitril
15% 4-(trans-4-n-Pentylcyclohexyl)-4'-ethylbiphenyl
5% 4-(trans-4-n-Pentylcyclohexyl)-4'-cyanobiphenyl
10% 4-(trans-4-n-Pentylcyclohexyl)-4'-(trans-4-n-propylcyclohexyl)-biphenyl

gelöst. Dieses Guest-Host-System zeigt in einem elektrooptischen Anzeigeelement bei einer Schichtdicke von 5 µm bei Kunstlicht (CIE-A) einen Farbabstand ΔE bis zum Achromasiepunkt von 0,8 und bei Tageslicht (CIE-D65) einen Farbabstand von 0,7. Bei einer Schichtdicke von 18 µm ergeben sich Farbabstände ΔE von 0,1 (CIE-A) bzw. 0,3 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 4

In einem Flüssigkristallgemisch aus

15% 4-(trans-4-n-Propylcyclohexyl)-benzonitril

27% 4-(trans-4-n-Propylcyclohexyl)-ethylbenzol
10% 4-(trans-4-n-Propylcyclohexyl)-ethoxybenzol
7% 4-(trans-4-n-Pentylcyclohexyl)-4′-cyanobiphenyl
9% 4-(trans-4-n-Propylcyclohexyl)-4′-ethylbenzol
8% 4-(trans-4-n-Pentylcyclohexyl)-4′-ethylbenzol
10% 4-(trans-4-n-Pentylcyclohexyl)-4′-(trans-4-n-propylcyclohexyl)-biphenyl
8% 4-(trans-4-n-Propylcyclohexyl)-benzoesäure-4-n-propylphenyl-ester
6% 4-(trans-4-n-Pentylcyclohexyl)-benzoesäure-4-n-propylphenyl-ester

werden

0,3% Azofarbstoff G 207 (λ max = 395 nm, Formel VI, $R_1 = C_4H_9$, $R_2 = C_3H_7$, n = 1)
0,6% Azofarbstoff G 232 (λ max = 443 nm, Formel V, $R_1 = R_2 = -NHC_4H_9$, n = 2, $Ph_3$ = 1,4-Naphthylen)
0,3% Azofarbstoff G 239 (λ max = 520 nm, Formel V, $R_1 = C_4H_9$, $R_2 = N(CH_3)_2$, n = 1, $Ph_2$ = 1,4-Naphthylen)
0,7% Azofarbstoff G 241 (λ max = 560 nm, Formel V, $R_1 = C_4H_9$, $R_2 = N(C_2H_5)_2$, n = 2, $Ph_3$ = 1,4-Naphthylen)
2,9% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 688 nm)

gelöst.

Dieses Guest-Host-System zeigt in einem elektrooptischen Anzeigeelement bei einer Schichtdicke von 1 µm bei Kunstlicht (CIE-A) einen Farbabstand ΔE bis zum Achromasiepunkt von 0,4 und bei Tageslicht (CIE-D65) einen Farbabstand ΔE von 0,3. Bei einer Schichtdicke von 5 (10) µm ergeben sich Farbabstände ΔE von 0,98 (0,2) (CIE-A) bzw. 0,6 (0,1) (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 5

In einem Flüssigkristallgemisch aus

19% 4-(trans-4-Ethylcyclohexyl)-cyclohexan-4′-carbonitril
19% 4-(trans-4-n-Butylcyclohexyl)-cyclohexan-4′-carbonitril
9% 4-(trans-5-n-Propyl-1,3-dioxan-2-yl)-benzonitril
10% 4-(trans-5-n-Butyl-1,3-dioxan-2-yl)-benzonitril
9% trans-4-n-Pentylcyclohexancarbonsäure-4-(trans-4-n-propylcyclohexyl)-phenyl-ester
9% trans-4-(trans-4-n-Butylcyclohexyl)-cyclohexan-carbonsäure-(trans-4-n-propylcyclohexyl)-ester
15% trans-4-n-Pentylcyclohexancarbonsäure-(trans-4-n-propylcyclohexyl)-ester
7% 4,4′-Bis-(trans-4-n-propylcyclohexyl)-biphenyl
3% 4-(trans-4-n-Pentylcyclohexyl)-4′-(trans-4-n-propylcyclohexyl)-biphenyl

werden

0,4% Azofarbstoff G 207 (λ max = 395 nm, Formel VI, $R_1 = C_4H_9$, $R_2 = C_3H_7$, n = 1)
0,7% Azofarbstoff G 232 (λ max = 443 nm, Formel V, $R_1 = R_2 = -NHC_4H_9$, n = 2, $Ph_3$ = 1,4-Naphthylen)
0,4% Azofarbstoff G 239 (λ max = 520 nm, Formel V, $R_1 = C_4H_9$, $R_2 = N(CH_3)_2$, n = 1, $Ph_2$ = 1,4-Naphthylen)
0,9% Azofarbstoff G 241 (λ max = 560 nm, Formel V, $R_1 = C_4H_9$, $R_2 = N(C_2H_5)_2$, n = 2, $Ph_3$ = 1,4-Naphthylen)
3,7% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 688 nm)

gelöst.

Dieses Guest-Host-System zeigt in einem elektrooptischen Anzeigeelement bei einer Schichtdicke von 1 µm bei Kunstlicht (CIE-A) einen Farbabstand ΔE bis zum Achromasiepunkt von 0,2 und bei Tageslicht (CIE-D65) einen Farbabstand ΔE von 0,6. Bei einer Schichtdicke von 7 µm ergeben sich Farbabstände ΔE von 0,2 (CIE-A) bzw. 0,5 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 6

In einem Flüssigkristallgemisch aus

17% 4-(trans-4-n-Propylcyclohexyl)-benzonitril
23% 4-(trans-4-n-Pentylcyclohexyl)-benzonitril
16% 4-(trans-4-n-Propylcyclohexyl)-ethoxybenzol
12% 4-(trans-4-n-Propylcyclohexyl)-butoxybenzol
22% 4-(trans-4-n-Pentylcyclohexyl)-4′-ethylbiphenyl
10% 4-(trans-4-n-Pentylcyclohexyl)-4′-(trans-4-n-propylcyclohexyl)-biphenyl

werden 6,1% der in Beispiel 5 beschriebenen Farbstoffmischung gelöst.

Dieses Guest-Host-System zeigt in einem elektrooptischen Anzeigeelement bei einer Schichtdicke von 1 µm bei Kunstlicht (CIE-A) einen Farbabstand ΔE vom Achromasiepunkt von 0,2 und bei Tageslicht (CIE-D65) einen Farbabstand ΔE von 0,4. Bei einer Schichtdicke von 5 (8) µm ergeben

sich Farbabstände ΔE von 0,4 (0,2) (CIE-A) bzw. 0,6 (0,1) (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 7

In einem Flüssigkristallgemisch aus

17% r-1-Cyan-cis-4-(trans-4-n-propylcyclohexyl)-1-n-pentyl-cyclohexan
35% r-1-Cyan-cis-4-(trans-4-n-propylcyclohexyl)-1-n-heptyl-cyclohexan
30% r-1-Cyan-cis-4-(trans-4-n-pentylcyclohexyl)-1-n-pentyl-cyclohexan
18% r-1-Cyan-cis-4-(trans-4-n-heptylcyclohexyl)-1-n-propyl-cyclohexan

werden

0,3% Azofarbstoff G 207 (λ max = 395 nm, Formel VI, $R_1 = C_4H_9$, $R_2 = C_3H_7$, n = 1)
0,6% Azofarbstoff G 232 (λ max = 443 nm, Formel V, $R_1 = R_2 = -NHC_4H_9$, n = 2, $Ph_3$ = 1,4-Naphthylen)
0,3% Azofarbstoff G 239 (λ max = 520 nm, Formel V, $R_1 = C_4H_9$, $R_2 = N(CH_3)_2$, n = 1, $Ph_2$ = 1,4-Naphthylen)
0,7% Azofarbstoff G 241 (λ max = 560 nm, Formel V, $R_1 = C_4H_9$, $R_2 = N(C_2H_5)_2$, n = 2, $Ph_3$ = 1,4-Naphthylen)
2,9% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 688 nm)

gelöst.

Dieses Guest-Host-System zeigt in einem elektrooptischen Anzeigeelement bei einer Schichtdicke von 1 µm bei Kunstlicht (CIE-A) einen Farbabstand ΔE bis zum Achromasiepunkt von 0,3 und bei Tageslicht (CIE-D65) einen Farbabstand ΔE von 0,4. Bei einer Schichtdicke von 7 µm ergeben sich Farbabstände ΔE von 0,4 (CIE-A) bzw. 0,3 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 8

In einem Flüssigkristallgemisch aus

9% r-1-Cyan-cis-4-(trans-4-n-propylcyclohexyl)-1-n-pentyl-cyclohexan
18% r-1-Cyan-cis-4-(trans-4-n-propylcyclohexyl)-1-n-heptyl-cyclohexan
16% r-1-Cyan-cis-4-(trans-4-n-pentylcyclohexyl)-1-n-pentyl-cyclohexan
9% r-1-Cyan-cis-4-(trans-4-n-heptylcyclohexyl)-1-n-propyl-cyclohexan
16% p-trans-4-n-Butylcyclohexyl-benzoesäure-(trans-4-n-propylcyclohexyl)-ester
11% p-trans-4-n-Pentylcyclohexyl-benzoesäure-(trans-4-n-propylcyclohexyl)-ester
13% trans-4-n-Pentylcyclohexancarbonsäure-(trans-4-n-propylcyclohexyl)-ester
8% trans,trans-4-n-Butylcyclohexylcyclohexan-4'-carbonsäure-trans-4-n-propylcyclohexyl-ester

werden

0,3% Azofarbstoff G 207 (λ max = 395 nm, Formel VI, $R_1 = C_4H_9$, $R_2 = C_3H_7$, n = 1)
0,6% Azofarbstoff G 232 (λ max = 443 nm, Formel V, $R_1 = R_2 = -NHC_4H_9$, n = 2, $Ph_3$ = 1,4-Naphthylen)
0,3% Azofarbstoff G 239 (λ max = 520 nm, Formel V, $R_1 = C_4H_9$, $R_2 = N(CH_3)_2$, n = 1, $Ph_2$ = 1,4-Naphthylen)
0,7% Azofarbstoff G 241 (λ max = 560 nm, Formel V, $R_1 = C_4H_9$, $R_2 = N(C_2H_5)_2$, n = 2, $Ph_3$ = 1,4-Naphthylen)
2,9% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 688 nm)

gelöst.

Dieses Guest-Host-System zeigt in einem elektrooptischen Anzeigeelement bei einer Schichtdicke von 2 µm bei Kunstlicht (CIE-A) einen Farbabstand ΔE bis zum Achromasiepunkt von 0,5 und bei Tageslicht (CIE-D65) einen Farbabstand ΔE von 0,7. Bei einer Schichtdicke von 7 µm ergeben sich ein Farbabstand ΔE von 0,3 bei Kunst- und Tageslicht.

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 9

In einem Flüssigkristallgemisch aus

24% r-1-Cyan-cis-4-(trans-4-n-propylcyclohexyl)-1-n-heptyl-cyclohexan
21% r-1-Cyan-cis-4-(trans-4-n-gentylcyclohexyl)-1-n-pentyl-cyclohexan
12% r-1-Cyan-cis-4-(trans-4-n-heptylcyclohexyl)-1-n-propyl-cyclohexan
17% p-trans-4-n-Butylcyclohexyl-benzoesäure-(trans-4-n-propylcyclohexyl)-ester
12% p-trans-4-n-Pentylcyclohexyl-benzoesäure-(trans-4-n-propylcyclohexyl)-ester
14% trans-4-n-Pentylcyclohexancarbonsäure-(trans-4-n-propylcyclohexyl)-ester

werden

0,3% Azofarbstoff G 207 (λ max = 395 nm, Formel IV, $R_1 = C_4H_9$, $R_2 = C_3H_7$, n = 1)
0,6% Azofarbstoff G 232 (λ max = 443 nm, Formel V, $R_1 = R_2 = -NHC_4H_9$, n = 2, $Ph_3$ = 1,4-Naphthylen)
0,3% Azofarbstoff G 239 (λ max = 520 nm, Formel V, $R_1 = C_4H_9$, $R_2 = N(CH_3)_2$, n = 1, $Ph_2$ = 1,4-Naphthylen)

0,7% Azofarbstoff G 241 ($\lambda$ max = 560 nm, Formel V, $R_1 = C_4H_9$, $R_2 = N(C_2H_5)_2$, n = 2, $Ph_3$ = 1,4-Naphthylen)
2,9% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, $\lambda$ max = 688 nm)
gelöst.

Dieses Guest-Host-System zeigt in einem elektrooptischen Anzeigeelement bei einer Schichtdicke von 2 µm bei Kunstlicht (CIE-A) einen Farbabstand $\Delta E$ bis zum Achromasiepunkt von 0,8 und bei Tageslicht (CIE-D65) einen Farbabstand $\Delta E$ von 0,5. Bei einer Schichtdicke von 6 µm (10 µm) ergeben sich Farbabstände $\Delta E$ von 0,9 (0,2) (CIE-A) bzw. 0,5 (0,1) (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 10

In einem Flüssigkristallgemisch aus

15% p-trans-4-Propylcyclohexyl-benzonitril,
27% trans-1-p-Ethylphenyl-4-propylcyclohexan,
10% trans-1-p-Ethoxyphenyl-4-propylcyclohexan,
7% 4-Cyan-4′-(trans-4-pentylcyclohexyl)-biphenyl,
9% 4-Ethyl-4′-(trans-4-propylcyclohexyl)-biphenyl,
8% 4-Ethyl-4′-(trans-4-pentylcyclohexyl)-biphenyl,
10% 4-(trans-4-Pentylcyclohexyl)-4′-(trans-4-propylcyclohexyl)-biphenyl,
8% p-trans-4-Propylcyclohexyl-benzoesäure-(p-propylphenylester) und
6% p-trans-4-Pentylcyclohexyl-benzoesäure-(p-propylphenylester
werden
0,9% Azofarbstoff G 232 ($\lambda$ max = 443 nm, Formel V, $R_1 = R_2 = -NHC_4H_9$, n = 2, $Ph_3$ = 1,4-Naphthylen),
0,4% Azofarbstoff G 239 ($\lambda$ max = 520 nm, Formel V, ($R_1 = C_4H_9$, $R_2 = N(CH_3)_2$, n = 1, $Ph_2$ = 1,4-Naphthylen),
0,9% Azofarbstoff G 241 ($\lambda$ max = 560 nm, Formel V, ($R_1 = C_4H_9$, $R_2 = N(C_2H_5)_2$, n = 2, $Ph_3$ = 1,4-Naphthylen) und
3,7% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, $\lambda$ max = 688 nm)
gelöst. Dieses Gemisch zeigt einen Schmelzpunkt von −16 °C und einen Klärpunkt von 88 °C.

Dieses Guest-Host-System zeigt in einem elektrooptischen Anzeigeelement bei einer Schichtdicke von 1 µm bei Kunstlicht (CIE-A) einen Farbabstand $\Delta E$ bis zum Achromasiepunkt von 0,2 und bei Tageslicht (CIE-D65) einen Farbabstand $\Delta E$ von 0,1. Bei einer Schichtdicke von 8 µm ergeben sich Farbabstände $\Delta E$ von jeweils 0,1 (CIE-A) bzw. (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 11

In einem Flüssigkristallgemisch aus

15% p-trans-4-Propylcyclohexyl-benzonitril,
11% trans-1-p-Ethylphenyl-4-propylcyclohexan,
15% trans-1-p-Methoxyphenyl-4-propylcyclohexan,
5% trans-1-p-Ethoxyphenyl-4-propylcyclohexan,
6% 4-Cyan-4′-(trans-4-pentylcyclohexyl)-biphenyl,
12% 4-Ethyl-4′-(trans-4-propylcyclohexyl)-biphenyl,
8% 4-Ethyl-4′-(trans-4-pentylcyclohexyl)-biphenyl,
5% 4,4′-Bis-(trans-4-propylcyclohexyl)-biphenyl,
6% 4-(trans-4-Pentylcyclohexyl)-4′-(trans-4-propylcyclohexyl)-biphenyl,
6% 4,4′-Bis-(trans-4-propylcyclohexyl)-2-fluorbiphenyl,
4% trans-4-Propylcyclohexancarbonsäure-(p-methoxyphenylester),
3% trans-4-Propylcyclohexancarbonsäure-(p-ethoxyphenylester) und
4% trans-4-Butylcyclohexancarbonsäure-(p-methoxyphenylester)
werden
1,1 % Azofarbstoff G 232 ($\lambda$ max = 443 nm, Formel V, $R_1 = R_2 = -NHC_4H_9$, n = 2, $Ph_3$ = 1,4-Naphthylen),
0,65% Azofarbstoff G 239 ($\lambda$ max = 520 nm, Formel V, ($R_1 = C_4H_9$, $R_2 = N(CH_3)_2$, n = 1, $Ph_2$ = 1,4-Naphthylen),
0,5 % Azofarbstoff G 241 ($\lambda$ max = 560 nm, Formel V, ($R_1 = C_4H_9$, $R_2 = N(C_2H_5)_2$, n = 2, $Ph_3$ = 1,4-Naphthylen),
2,1 % eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, $\lambda$ max = 688 nm) und
1,45% ICI-Anthrachinonfarbstoff Green 24 ($\lambda$ max = 640 nm)
gelöst. Dieses Gemisch zeigt einen Schmelzpunkt von −20 °C und einen Klärpunkt von 114 °C.

Dieses Guest-Host-System zeigt in einem elektrooptischen Anzeigeelement bei einer Schichtdicke von 4 µm bei Kunstlicht (CIE-A) einen Farbabstand $\Delta E$ bis zum Achromasiepunkt von 0,2 und bei Tageslicht (CIE-D65) einen Farbabstand $\Delta E$ von 0,5. Bei einer Schichtdicke von 7 µm ergeben

sich Farbabstände ΔE von jeweils 0,4 (CIE-A) bzw. 0,2 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Mit dieser Mischung erzielt man erstmalig eine Absorption von 3A in einer 9 µm-Heilmeier-Zelle mit einem Polarisator.

Beispiel 12

In einem Flüssigkristallgemisch aus

15% p-trans-4-Propylcyclohexyl-benzonitril,
27% trans-1-p-Ethylphenyl-4-propylcyclohexan,
10% trans-1-p-Ethoxyphenyl-4-propylcyclohexan,
7% 4-Cyan-4'-(trans-4-pentylcyclohexyl)-biphenyl,
9% 4-Ethyl-4'-(trans-4-propylcyclohexyl)-biphenyl,
8% 4-Ethyl-4'-(trans-4-pentylcyclohexyl)-biphenyl,
10% 4-(trans-4-Pentylcyclohexyl)-4'-(trans-4-propylcyclohexyl)-biphenyl,
8% p-trans-4-Propylcyclohexyl-benzoesäure-(p-propylphenylester) und
6% p-trans-4-Pentylcyclohexyl-benzoesäure-(p-propylphenylester

werden

0,85% Azofarbstoff G 232 (λ max = 443 nm, Formel V, $R_1 = R_2 = -NHC_4H_9$, n = 2, $Ph_3$ = 1,4-Naphthylen),
0,50% Azofarbstoff G 239 (λ max = 520 nm, Formel V, ($R_1 = C_4H_9$, $R_2 = N(CH_3)_2$, n = 1, $Ph_2$ = 1,4-Naphthylen),
0,46% Azofarbstoff G 241 (λ max = 560 nm, Formel V, ($R_1 = C_4H_9$, $R_2 = N(C_2H_5)_2$, n = 2, $Ph_3$ = 1,4-Naphthylen),
1,62% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 688 nm) und
1,25% ICI-Anthrachinonfarbstoff Green 24 (λ max = 640 nm)

gelöst. Dieses Gemisch zeigt einen Schmelzpunkt von −16 °C und einen Klärpunkt von 89 °C.

Dieses Guest-Host-System zeigt in einem elektrooptischen Anzeigeelement bei einer Schichtdicke von 3 µm bei Kunstlicht (CIE-A) einen Farbabstand ΔE bis zum Achromasiepunkt von 0,3 und bei Tageslicht (CIE-D65) einen Farbabstand ΔE von 0,5. Bei einer Schichtdicke von 10 µm ergeben sich Farbabstände ΔE von 0,15 (CIE-A) bzw. 0,04 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Mit dieser Mischung erzielt man eine Absorption von 2,3 A in einer 9 µm-Heilmeier-Zelle mit einem Polarisator.

Beispiel 13

In einem Flüssigkristallgemisch aus

15% p-trans-4-Propylcyclohexyl-benzonitril,
12% p-trans-4-Butylcyclohexyl-benzonitril,
10% trans-1-p-Ethylphenyl-4-propylcyclohexan,
14% trans-1-p-Methoxyphenyl-4-propylcyclohexan,
6% 4-Cyan-4'-(trans-4-pentylcyclohexyl)-biphenyl,
10% 4-Ethyl-4'-(trans-4-propylcyclohexyl)-biphenyl,
9% 4-Ethyl-4'-(trans-4-pentylcyclohexyl)-biphenyl,
4% 4,4'-Bis-(trans-4-propylcyclohexyl)-biphenyl,
6% 4-(trans-4-Pentylcyclohexyl)-4'-(trans-4-propylcyclohexyl)-biphenyl,
8% p-trans-4-Propylcyclohexyl-benzoesäure-(p-propylphenylester) und
6% p-trans-4-Pentylcyclohexyl-benzoesäure-(p-propylphenylester

werden

0,75% Azofarbstoff G 232 (λ max = 443 nm, Formel V, $R_1 = R_2 = -NHC_4H_9$, n = 2, $Ph_3$ = 1,4-Naphthylen),
0,30% Azofarbstoff G 239 (λ max = 520 nm, Formel V, ($R_1 = C_4H_9$, $R_2 = N(CH_3)_2$, n = 1, $Ph_2$ = 1,4-Naphthylen),
0,65% Azofarbstoff G 241 (λ max = 560 nm, Formel V, ($R_1 = C_4H_9$, $R_2 = N(C_2H_5)_2$, n = 2, $Ph_3$ = 1,4-Naphthylen) und
2,75% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 688 nm)

gelöst. Dieses Gemisch zeigt einen Schmelzpunkt von −18 °C und einen Klärpunkt von 105 °C.

Dieses Guest-Host-System zeigt in einem elektrooptischen Anzeigeelement bei einer Schichtdicke von 1 µm bei Kunstlicht (CIE-A) einen Farbabstand ΔE bis zum Achromasiepunkt von 0,3 und bei Tageslicht (CIE-D65) einen Farbabstand ΔE von 0.2. Bei einer Schichtdicke von 11 µm ergeben sich Farbabstände ΔE von 0,04 (CIE-A) bzw. 0,01 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel14

In einem Flüssigkristallgemisch aus Beispiel 11 werden

1,10% Azofarbstoff G 232 (λ max = 443 nm, Formel V, $R_1 = R_2 = -NHC_4H_9$, n = 2, $Ph_3$ = 1,4-Naphthylen),
0,65% Azofarbstoff G 239 (λ max = 520 nm, Formel V, ($R_1 = C_4H_9$, $R_2 = N(CH_3)_2$, n = 1, $Ph_2$ = 1,4-Naphthylen),

0,50% Azofarbstoff G 241 (λ max = 560 nm, Formel V, ($R_1$ = $C_4H_9$, $R_2$ = $N(C_2H_5)_2$, n = 2, $Ph_3$ = 1,4-Naphthylen),

0,73% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 688 nm)

1,10% ICI-Anthrachinonfarbstoff Green 24 (λ max = 640 nm) und

2,20% eines Anthrachinonfarbstoffes LCD-105 (Formel III, Z=Y=H, $R_3$=$R_4$=H, W=X=$NH_2$, $R_1$, $R_2$=(–CO–)$_2$ N–$C_3H_6$–O–$C_8H_{17}$; λ max = 680 nm)

gelöst.

Dieses Gemisch zeigt einen Schmelzpunkt von –20 °C und einen Klärpunkt von 113 °C.

Dieses Guest-Host-System zeigt in einem elektrooptischen Anzeigeelement bei einer Schichtdicke von 2 µm bei Kunstlicht (CIE-A) einen Farbabstand ΔE bis zum Achromasiepunkt von 0,4 und bei Tageslicht (CIE-D65) einen Farbabstand ΔE von 0,3. Bei einer Schichtdicke von 8 µm ergeben sich Farbabstände ΔE von jeweils 0,1 (CIE-A) bzw. (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 15

In einem Flüssigkristallgemisch aus Beispiel 11 werden

1,10% Azofarbstoff G 232 (λ max = 443 nm, Formel V, $R_1$ = $R_2$ = –$NHC_4H_9$, n = 2, $Ph_3$ = 1,4-Naphthylen),

0,65% Azofarbstoff G 239 (λ max = 520 nm, Formel V, ($R_1$ = $C_4H_9$, $R_2$ = $N(CH_3)_2$, n = 1, $Ph_2$ = 1,4-Naphthylen),

0,50% Azofarbstoff G 241 (λ max = 560 nm, Formel V, ($R_1$ = $C_4H_9$, $R_2$ = $N(C_2H_5)_2$, n = 2, $Ph_3$ = 1,4-Naphthylen),

0,95% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 688 nm)

0,70% ICI-Anthrachinonfarbstoff Green 24 (λ max = 640 nm) und

2,00% eines Anthrachinonfarbstoffes LCD-106 (Formel III, Z=Y=H, $R_3$=$R_4$=H, W=X=$NH_2$, $R_1$, $R_2$=(–CO)$_2$ N–$C_2H_4$–O–$C_6H_{13}$; λ max = 668 nm)

gelöst.

Dieses Gemisch zeigt einen Schmelzpunkt von –20 °C und einen Klärpunkt von 112 °C.

Dieses Guest-Host-System zeigt in einem elektrooptischen Anzeigeelement bei einer Schichtdicke von 4 µm bei Kunstlicht (CIE-A) einen Farbabstand ΔE bis zum Achromasiepunkt von 0,2 und bei Tageslicht (CIE-D65) einen Farbabstand ΔE von 0,3. Bei einer Schichtdicke von 8 µm ergeben sich Farbabstände ΔE von 0,5 (CIE-A) bzw. 0,1 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 16

In einem Flüssigkristallgemisch aus Beispiel 11 werden

1,10% Azofarbstoff G 232 (λ max = 443 nm, Formel V, $R_1$ = $R_2$ = –$NHC_4H_9$, n = 2, $Ph_3$ = 1,4-Naphthylen),

0,65% Azofarbstoff G 239 (λ max = 520 nm, Formel V, ($R_1$ = $C_4H_9$, $R_2$ = $N(CH_3)_2$, n = 1, $Ph_2$ = 1,4-Naphthylen),

0,50% Azofarbstoff G 241 (λ max = 560 nm, Formel V, ($R_1$ = $C_4H_9$, $R_2$ = $N(C_2H_5)_2$, n = 2, $Ph_3$ = 1,4-Naphthylen),

1,30% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, λ max = 688 nm)

1,45% ICI-Anthrachinonfarbstoff Green 24 (λ max = 640 nm) und

2,15% eines Anthrachinonfarbstoffes LCD-109 (Formel III, Z=Y=H, $R_3$=$R_4$=H, W=X=$NH_2$, $R_1$, $R_2$=(–CO) (CS) N–$C_2H_4$–O–$C_6H_{13}$; λ max = 763 nm)

gelöst.

Dieses Gemisch zeigt einen Schmelzpunkt von –20 °C und einen Klärpunkt von 114 °C.

Dieses Guest-Host-System zeigt in einem elektrooptischen Anzeigeelement bei einer Schichtdicke von 6 µm bei Kunstlicht (CIE-A) einen Farbabstand ΔE bis zum Achromasiepunkt von 0,2 und bei Tageslicht (CIE-D65) einen Farbabstand ΔE von 0,1. Bei einer Schichtdicke von 8 µm ergeben sich Farbabstände ΔE von jeweils $<0,01$ (CIE-A bzw. CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

Beispiel 17

In einem Flüssigkristallgemisch aus Beispiel 10 werden

1,10% Azofarbstoff G 232 (λ max = 443 nm, Formel V, $R_1$ = $R_2$ = –$NHC_4H_9$, n = 2, $Ph_3$ = 1,4-Naphthylen),

0,65% Azofarbstoff G 239 (λ max = 520 nm, Formel V, ($R_1$ = $C_4H_9$, $R_2$ = $N(CH_3)_2$, n = 1, $Ph_2$ = 1,4-Naphthylen),

0,50% Azofarbstoff G 241 (λ max = 560 nm, Formel V, ($R_1$ = $C_4H_9$, $R_2$ = $N(C_2H_5)_2$, n = 2, $Ph_3$ = 1,4-Naphthylen),

1,15% eines Gemisches von Naphthochinonfarbstoffen der Formel IV (erhältlich durch Umsetzung von 4,8-Diamino-1,5-naphthochinon mit äquimolaren Mengen von 4-n-Butoxyanilin, 4-n-Pentoxyanilin, 4-n-Hexyloxyanilin und 4-n-Heptyloxyanilin, $\lambda$ max = 688 nm)

0,80% ICI-Anthrachinonfarbstoff Green 24 ($\lambda$ max = 640 nm) und

2,20% eines Anthrachinonfarbstoffes LCD-III (Formel III, Z=Y=H, $R_3=R_4=H$, $W=X=NH_2$, $R_1$, $R_2$=(–CO) (C=N–$C_2H_4$–O–$C_8H_{17}$) N–$C_2H_4$–O–$C_6H_{13}$; $\lambda$ max = 670 nm)

gelöst.

Dieses Gemisch zeigt einen Schmelzpunkt von –16 °C und einen Klärpunkt von 87 °C.

Dieses Guest-Host-System zeigt in einem elektrooptischen Anzeigeelement bei einer Schichtdicke von 5 µm bei Kunstlicht (CIE-A) einen Farbabstand $\Delta E$ bis zum Achromasiepunkt von 0,4 und bei Tageslicht (CIE-D65) einen Farbabstand $\Delta E$ von 0,1. Bei einer Schichtdicke von 8 µm ergeben sich Farbabstände $\Delta E$ von 0,3 (CIE-A) bzw. 0,1 (CIE-D65).

Diese Zahlen zeigen, dass die Farbeigenschaften des elektrooptischen Anzeigeelementes für das menschliche Auge unabhängig von der gewählten Beleuchtungsart und Schichtdicke sind.

**Patentansprüche**

1. Flüssigkristallines Guest-Host-System mit beleuchtungsartunabhängigen und schichtdickenunabhängigen Farbeigenschaften mit mindestens zwei pleochroitischen Farbstoffen, dadurch gekennzeichnet, dass mindestens einer der Farbstoffe ein Absorptionsmaximum oberhalb 665 nm besitzt, wobei die Farbstoffe und deren Konzentrationen so gewählt werden, dass ein das flüssigkristalline Guest-Host-System enthaltendes elektrooptisches Anzeigeelement einen nach CIE (1964) gemessenen Farbabstand $\Delta E$ bis zum Achromasiepunkt kleiner als 5 Einheiten aufweist.

2. Flüssigkristallines Guest-Host-System nach Anspruch 1, dadurch gekennzeichnet, dass mindestens einer der Farbstoffe ein Absorptionsmaximum oberhalb 670 nm besitzt.

3. Flüssigkristallines Guest-Host-System nach einem der Ansprüche 1 und 2, dadurch gekennzeichnet, dass der Anteil des Farbstoffes bzw. der Farbstoffe mit einem Absorptionsmaximum oberhalb 665 nm 0,5 bis 5 Gewichtsprozent beträgt.

4. Flüssigkristallines Guest-Host-System nach einem der Ansprüche 1 bis 3, dadurch gekennzeichnet, dass es 3 bis 5 pleochroitische Farbstoffe enthält.

5. Flüssigkristallines Guest-Host-System nach einem der Ansprüche 1 bis 4, dadurch gekennzeichnet, dass die pleochroitischen Farbstoffe einen geeigneten Teil des sichtbaren Spektrums abdecken und die Absorption in diesem Bereich mehr oder weniger konstant ist.

6. Flüssigkristallines Guest-Host-System nach einem der Ansprüche 1 bis 5, dadurch gekennzeichnet, dass mindestens ein Farbstoff der Klasse der Naphthochinon- und/oder Azo-Farbstoffe angehört.

7. Flüssigkristallines Guest-Host-System nach einem der Ansprüche 1 bis 6, dadurch gekennzeichnet, dass mindestens ein Farbstoff der Klasse der Anthrachinon- und/oder Perylen-Farbstoffe angehört.

8. Verwendung eines flüssigkristallinen Guest-Host-Systems nach einem der Ansprüche 1 bis 7 für elektrooptische Anzeigeelemente.

9. Elektrooptisches Anzeigeelement, dadurch gekennzeichnet, dass es ein flüssigkristallines Guest-Host-System nach einem der Ansprüche 1 bis 7 enthält.

**Claims**

1. Liquid-crystal guest-host system having colour properties which are independent of the mode of illumination and independent of the layer thickness and having at least two pleochroic dyestuffs, characterised in that at least one of the dyestuffs has an absorption maximum above 665 nm, the dyestuffs and their concentrations being selected such that an electro-optical display element containing the liquid-crystal guest-host system exhibits a colour separation $\Delta E$, measured by the CIE (1964) method, from the point of achromatism which is less than 5 units.

2. Liquid-crystal guest-host system according to Claim 1, characterised in that at least one of the dyestuffs has an absorption maximum above 670 nm.

3. Liquid-crystal guest-host system according to one of Claims 1 and 2, characterised in that the percentage of the dyestuff or the dyestuffs having an absorption maximum of above 665 nm is 0.5 to 5 percent by weight.

4. Liquid-crystal guest-host system according to one of Claims 1 to 3, characterised in that it contains 3 to 5 pleochroic dyestuffs.

5. Liquid-crystal guest-host system according to one of Claims 1 to 4, characterised in that the pleochroic dyestuffs mask a suitable part of the visible spectrum and the absorption in this range being more or less constant.

6. Liquid-crystal guest-host system according to one of Claims 1 to 5, characterised in that at least one dyestuff belongs to the class of naphthoquinone and/or azo dyestuffs.

7. Liquid-crystal guest-host system according to one of Claims 1 to 6, characterised in that at least one dyestuff belongs to the class of anthraquinone and/or perylene dyestuffs.

8. Use of a liquid-crystal guest-host system according to one of Claims 1 to 7 for electro-optical display elements.

9. Electro-optical display element, characterised in that it contains a liquid-crystal guest-host system according to one of Claims 1 to 7.

**Revendications**

1. Système guest-host à cristaux liquides avec des propriétés de couleur indépendantes de l'éclairement et indépendantes de l'épaisseur de couche avec au moins deux colorants pléochroïques, caractérisé en ce qu'au moins l'un des colorants possède un maximum d'absorption au-dessus de 665 nm, les colorants et leurs concentrations étant choisis de sorte qu'un élément d'affichage électrooptique contenant le système guest-host à cristaux liquides présente un écart de couleur ΔE mesuré selon CIE (1964) par rapport au point acromatique inférieur à 5 unités.

2. Système guest-host à cristaux liquides selon la revendication 1, caractérisé en ce qu'au moins l'un des colorants possède un maximum d'absorption au-dessus de 670 nm.

3. Système guest-host à cristaux liquides selon l'une des revendications 1 et 2, caractérisé en ce que la teneur du colorant ou des colorants avec un maximum d'absorption au-dessus de 665 nm est comprise entre 0,5 et 5 pourcent en poids.

4. Système guest-host à cristaux liquides selon l'une des revendications 1 à 3, caractérisé en ce qu'il contient de 3 à 5 colorants pléochroïques.

5. Système guest-host à cristaux liquides selon l'une des revendications 1 à 4, caractérisé en ce que, les colorants pléochroïques recouvrent une partie appropriée du spectre visible et l'absorption dans cet intervalle est plus ou moins constante.

6. Système guest-host à cristaux liquides selon l'une des revendications 1 à 5, caractérisé en ce qu'au moins un colorant appartient à la classe des colorants naphtoquinone et/ou azoïques.

7. Système guest-host à cristaux liquides selon l'une des revendications 1 à 6, caractérisé en ce qu'au moins un colorant appartient à la classe des colorants anthraquinone et/ou perylène.

8. Utilisation d'un système guest-host à cristaux liquides selon l'une des revendications 1 à 7 pour des éléments d'affichage électrooptiques.

9. Elément d'affichage électrooptique, caractérisé en ce qu'il contient un système guest-host à cristaux liquides selon l'une des revendications 1 à 7.